# EUROPEAN PATENT SPECIFICATION

(11) **EP 2 763 483 B1**
(45) Date of publication and mention of the grant of the patent: **11.10.2017**
(21) Application number: 11873278.3
(22) Date of filing: 30.09.2011
(51) Int. Cl.: H04W 72/04, H04L 5/00

(54) **WIRELESS COMMUNICATION BASE STATION AND SYSTEM**
DRAHTLOS-BASISSTATION UND KOMMUNIKATIONSSYSTEM
STATION DE BASE ET SYSTÈME DE COMMUNICATION SANS FIL

(43) Date of publication of application: 06.08.2014
(73) Proprietor: Fujitsu Limited, Kawasaki-shi, Kanagawa 211-8588 (JP)
(72) Inventor: JITSUKAWA, Daisuke, Kawasaki-shi Kanagawa 211-8588 (JP)
(74) Representative: Ward, James Norman
(86) International application number: PCT/JP2011/072675
(87) International publication number: WO 2013/046469

(56) References cited:
- WO-A1-2011/115199
- JP-A- 2010 141 666
- KR-A- 20110 066 108
- NORTEL: "Discussion paper on the control channel and data channel optimization for relay link", 3GPP DRAFT; R1-091384(NORTEL-CONTROL_DATA_RELAY_LINK_D ESIGN_IN_LTE-A), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050338973, [retrieved on 2009-03-17]
- 'Evolved Universal Terrestrial Radio Access (E-UTRA); Physical channels and modulation' 3GPP TS36.211 V10.2.0, 3GPP June 2011, pages 1 - 108, XP014075763
- NTT DOCOMO: 'DL Control Channel Enhancement for DL MIMO in Rel-11' 3GPP R1-111636 vol. RAN WG1, 09 May 2011, BARCELONA, SPAIN, pages 1 - 6, XP050491272
- Stefania Sesia ET AL: "The UMTS Long Term Evolution" In: "LTE - the UMTS long term evolution : from theory to practice ; [Including release 10 for LTE-advanced]", 31 August 2011 (2011-08-31), Wiley, Chichester, XP055291397, ISBN: 978-0-470-66025-6 pages 343-370,

## Description

### [Technical Field]

The present invention relates to a wireless base station and a wireless communication system.

### [Background Art]

Conventionally, in long term evolution (LTE) or LTE-Advanced that is a next generation mobile communication system, a base station and a mobile station perform communication using various physical channels. The physical channels include a shared channel used for transmission of a data signal including user data, and a control channel used for transmission of a control signal including control information such as resource allocation information related to the data signal, and the like. When a data signal is transmitted from the base station using the shared channel among such physical channels, completion of transmission of a response to the data signal within a predetermined time by the mobile station that has received the data signal is defined in the LTE. Therefore, completion of demodulation of the data signal within a limited time is desired at the mobile station side.

As a technology of completing the demodulation of the data signal within a limited time, there is a technology of allocating a front resource of a time section (sub frame), in which the data signal is transmitted, to a control signal including resource allocation information related to the data signal, at the base station side. In such a technology, the base station transmits the control signal to the mobile station using the resource of the front sub frame. Meanwhile, the mobile station first demodulates the control signal arranged in the resource of the front sub frame in a distributed manner, and acquires the resource allocation information related to the data signal. The mobile station then demodulates the data signal based on the acquired resource allocation information.

Meanwhile, in recent years, in the LTE, there is a concern of capacity shortage of the control channel when communication is simultaneously performed among a large number of users, and a technology of expanding the control channel into a physical shared channel region has been examined as a technology of eliminating the capacity shortage of the control channel. This technology applies frequency multiplexing of a physical downlink control channel (PDCCH) that is one of control channels to a resource of a physical downlink shared channel (PDSCH) that is a shared channel, to expand the PDCCH. Note that, hereinafter, the expanded PDCCH is called enhanced-PDCCH (E-PDCCH).

### [Citation List]

### [Non Patent Literature]

Non Patent Literature 1: 3GPP TS 36.211 V10.2.0 (2011-06)

Non Patent Literature 2: 3GPP R1-111636 (2011-05) KR 2011 0066108 discloses a relay node apparatus and a method for transmitting and receiving signals at the same time, so as to efficiently transmit a signal through an access link without generating interference, whereby a control channel and a data shared channel are transmitted in resource regions which are frequency multiplexed.

### [Summary of Invention]

### [Technical Problem]

However, in the above-described conventional technology, there is a problem that a load associated with the demodulation of the data signal at the mobile station side is increased.

That is, in the conventional technology of expanding the control channel into a shared channel, the E-PDCCH is arranged in an entire single sub frame together with a normal PDCCH in a distributed manner. However, in this aspect, the mobile station demodulates the control signal in the E-PDCCH, and acquires the resource allocation information related to the PDSCH, only after receiving a signal of the one sub frame. That is, in this aspect, the mobile station does not acquire the resource allocation information related to the PDSCH until completion of reception of the signal of the one sub frame, and does not start demodulation of the data signal in the PDSCH. Therefore, in this aspect, to complete the demodulation of the data signal within a limited time, the mobile station executes the demodulation of the data signal in the PDSCH at a high speed. As a result, there is a concern of an increase in the load associated with the demodulation of the data signal at the mobile station side.

The disclosed technology has been made in view of the foregoing, and an objective is to provide a wireless communication system, a base station, a mobile station, and a wireless communication method capable of decreasing a load associated with demodulation of a data signal at a mobile station side.

### [Solution to Problem]

Aspects of embodiments of the present invention provide a wireless base station and a wireless communication system comprising the wireless base station and a wireless mobile station, as defined in the claims. The claims define the scope of the invention.

### [Advantageous Effects of Invention]

According to one aspect of a wireless communication system disclosed in the present application, there is an effect of decreasing a load associated with demodulation of a data signal at a mobile station side.

### [Brief Description of Drawings]

FIG. 1 is a diagram illustrating a configuration example of a wireless communication system according to a first embodiment.
FIG. 2 is a diagram for describing a method of mapping physical channels;
FIG. 3 is a diagram for describing a method of mapping a PDCCH;
FIG. 4 is a diagram indicating a time relationship between transmission/reception of a downlink shared channel PDSCH and transmission/reception of an HARQ response in an HARQ process.
FIG. 5 is a diagram for describing processing of receiving a downlink signal in a mobile station.
FIG. 6 is a diagram illustrating an example of an E-PDCCH by an FDM approach.
FIG. 7 is a diagram for describing a problem associated with introduction of the E-PDCCH.
FIG. 8 is a diagram for describing a principle of a method of transmitting an E-PDCCH in a wireless communication system according to the first embodiment.
FIG. 9 is a diagram illustrating an arrangement example of an E-Control region in the first embodiment.
FIG. 10 is a diagram indicating a time relationship between transmission/reception of a downlink shared channel PDSCH and transmission/reception of an HARQ response in an HARQ process in the first embodiment.
FIG. 11 is a diagram illustrating a configuration of a base station according to the first embodiment.
FIG. 12 is a diagram illustrating a configuration of a mobile station according to the first embodiment.
FIG. 13 is a diagram illustrating an operation of a wireless communication system according to the first embodiment.
FIG. 14 is a diagram for describing a principle of a method of transmitting an E-PDCCH in a wireless communication system according to a second embodiment.
FIG. 15 is a diagram illustrating a configuration of a base station according to the second embodiment.
FIG. 16 is a diagram illustrating a configuration of a mobile station according to the second embodiment.
FIG. 17 is a diagram illustrating an operation of the wireless communication system according to the second embodiment.

### [Embodiments for Carrying Out the Invention]

Hereinafter, exemplary embodiments of a wireless communication system, a base station, a mobile station, and a wireless communication method disclosed in the present application will be described in detail. Note that the invention is not limited by the embodiments.

### [First Embodiment]

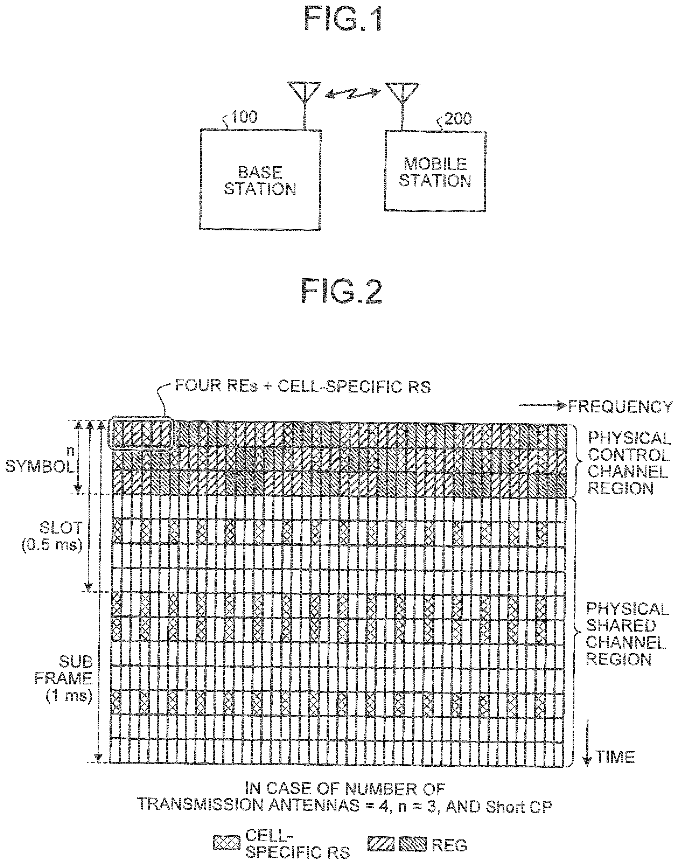

FIG. 1 is a diagram illustrating a configuration example of a wireless communication system according to a first embodiment. The wireless communication system illustrated in FIG. 1 includes a base station 100 and a mobile station 200. The base station 100 and the mobile station 200 transmit/receive a data signal and a control signal using various physical channels. For example, the base station 100 transmits the data signal including user data to the mobile station 200 using a shared channel among the physical channels, and transmits the control signal including resource allocation information related to the data signal to the mobile station 200 using a control channel.

Next, a technology as a base of a wireless communication method by a wireless communication system of the present embodiment will be described before description of the method. First, a configuration of each physical channel and a method of mapping the physical channels to time/frequency resources will be described with reference to FIG. 2. FIG. 2 is a diagram for describing a method of mapping each physical channel.

As illustrated in FIG. 2, a sub frame having a length of 1 ms is configured from fourteen orthogonal frequency division multiplexing (OFDM) symbols, and a control channel is mapped to n (= 1 to 3) OFDM symbols in front, in the time direction. The control channel is, for example, a physical control format indicator channel (PCFICH), a physical hybrid ARQ indicator channel (PHICH), or a physical downlink control channel (PDCCH).

The value of n is defined as control information called control format indicator (CFI). A shared channel (physical downlink shared channel (PDSCH)) used for transfer of user data is mapped to the remaining OFDM symbols. In the frequency direction, as an allocation unit of frequency resources, a resource block (RB) is configured from 12 sub carriers, and a share channel for each user is subjected to frequency multiplexing in unit of RBs. Further, a cell-specific reference signal (cell-specific RS) used for channel estimation and the like is mapped in the time and frequency directions in a scattered manner. Note that, as a minimum unit of the time/frequency resource, a resource element (RE) that is a region surrounded by one OFDM symbol and one sub carrier is defined. Further, as a mapping unit of the control channel, a resource element group (REG) configured from four continuous REs in the frequency direction excluding the RS is defined.

Next, a method of mapping a control channel among the above-described physical channels will be especially described in detail. The PCFICH is a physical channel used for transfer of CFI. Four PCFICH REGs are, in a head OFDM symbol in the sub frame, mapped within a system bandwidth starting from a position of a sub carrier depending on a cell ID (identity) at approximately equal intervals in a distributed manner.

The PHICH is a physical channel used for transferring ACK/NACK information related to an uplink shared channel. The number of PHICH groups is obtained depending on a parameter Ng notified from an upper layer, and three REGs are used for each PHICH group. The three REGs are mapped within the system bandwidth starting from a position of a sub carrier depending on a cell ID at approximately equal intervals in a distributed manner, in REGs to which the PCFICH has not been mapped.

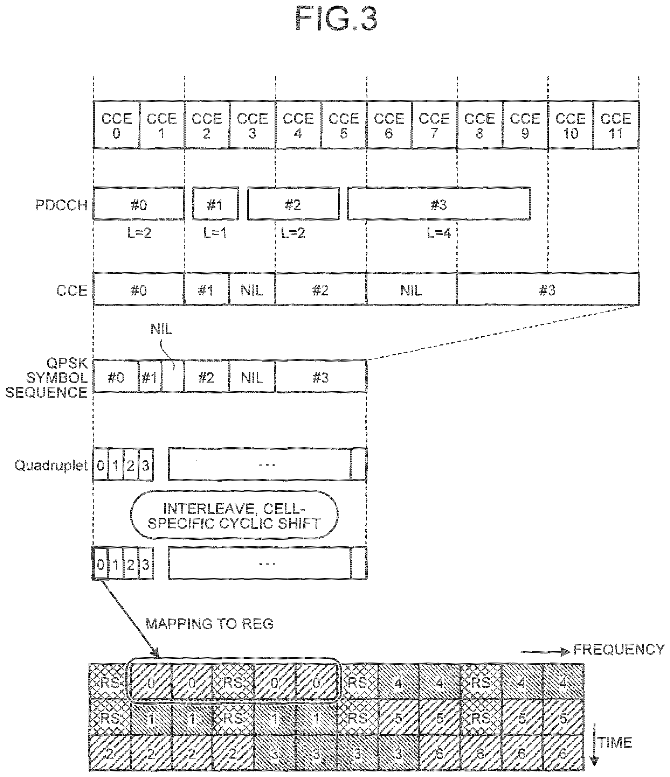

The PDCCH is a physical channel used for transferring notification information and scheduling information related to user data. FIG. 3 is a diagram for describing a method of mapping the PDCCH. As a unit of resources used by each PDCCH, a control channel element (CCE) is defined, and the CCE corresponds to nine REGs (= 36 REs). An aggregation level (hereinafter, described as "AL") is a parameter corresponding to the number of CCEs used by the PDCCH, that is, a spreading factor. The AL is set by the base station from among {1, 2, 4, and 8} according to a state of a wireless channel. Each PDCCH is properly offset and multiplexed, and is demodulated by quadrature phase shift keying (QPSK). Each PDCCH is subjected to interleave in unit of four demodulation symbols, and is then mapped to an REG to which the PCFICH and the PHICH have not been mapped.

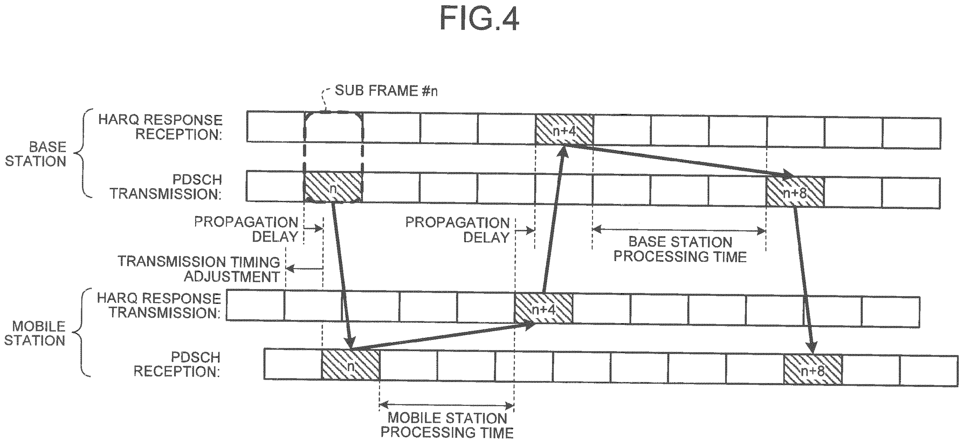

Next, an automatic retransmission (hybrid automatic repeat request (HARQ)) process of a shared channel PDSCH among the above-described physical channels will be especially described. When a data signal is transmitted from the base station using the shared channel PDSCH, completion of transmission of a response in response to the data signal within a predetermined time by the mobile station that has received the data signal is defined in the HARQ process in the LTE. FIG. 4 is a diagram indicating a time relationship between transmission/reception of a downlink shared channel PDSCH and transmission/reception of an HARQ response in an HARQ process.

For example, in the HARQ process, when the base station transmits the PDSCH in a sub frame (time section) #n (note that, n is an integer of 1 or more), the mobile station transmits an HARQ response indicating confirmation of delivery of the PDSCH through an uplink control channel. Execution of the transmission of the HARQ response in a sub frame #(n + 4) is defined in the specification of the LTE. Therefore, it is desired that demodulation of the PDSCH is completed within a limited time from the end of the sub frame #n to the head of the sub frame #(n + 4) at the mobile station side.

Note that, in the example of FIG. 4, the transmission timing of the uplink signal is adjusted in consideration of a propagation delay between a downlink and an uplink.

Further, in the example of FIG. 4, when having received the HARQ response in the sub frame #(n + 4), the base station transmits a next PDSCH in the HARQ process. To be specific, when the HARQ response expresses NACK, the base station transmits a PDSCH based on the data signal previously transmitted in the HARQ process, and when the HARQ response expresses ACK, the base station transmits a PDSCH based on a new data signal. While the transmission timing of the PDSCH is not defined in the specification of the LTE, a timing at which the PDSCH can be transmitted earliest is considered to be a sub frame #(n + 8).

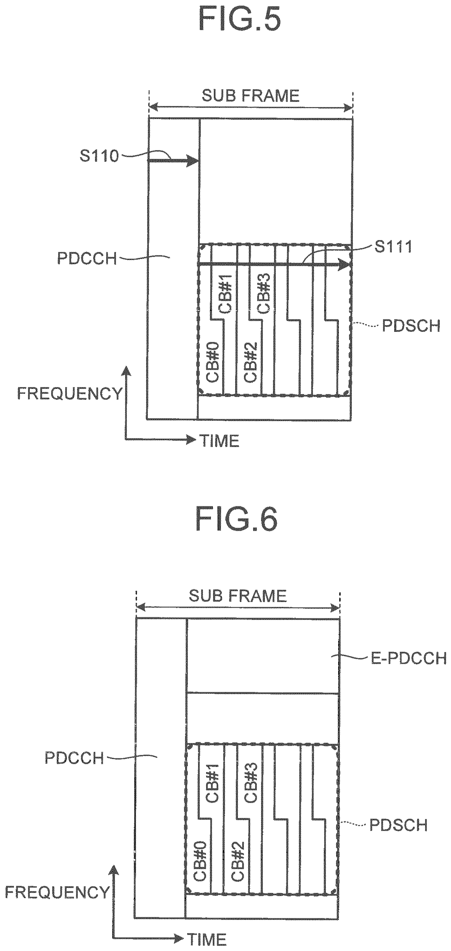

As described above, in the HARQ process in the LTE, it is desired that the mobile station completes the demodulation of the data signal within a limited time. In the LTE, to complete the demodulation of the data signal within a limited time, processing of transmitting a downlink signal at the base station side and processing of receiving a downlink signal in the mobile station have been improved. For example, the base station allocates a resource of a front sub frame, in which the data signal is transmitted, to the control signal including the resource allocation information related to the data signal, and transmits the control signal to the mobile station using the resource in the front sub frame. Meanwhile, the mobile station completes the demodulation of the data signal within a limited time by performing the reception processing as illustrated in FIG. 5. FIG. 5 is a diagram for describing processing of receiving a downlink signal in the mobile station.

In FIG. 5, the mobile station first demodulates the PDCCH arranged in the resource of the front sub frame in a distributed manner, and acquires the resource allocation information related to the PDSCH (S110). The mobile station then demodulates the data signal that is a signal component of the PDSCH from a received signal based on the acquired resource allocation information (S111). Note that one PDSCH includes at least one code block (CB #0, CB #1, CB #2, CB #3, ...), which is a processing unit of error correction coding, and each code block is arranged in order to the front in the time direction. Therefore, the mobile station can start the demodulation of the data signal at timing when having received one code block without waiting for reception of all signal components of the PDSCH. With such improvement, the mobile station can complete the demodulation of the data signal within a limited time.

Meanwhile, in the LTE, to eliminate the capacity shortage of the control channel of recent years, a concept of frequency division multiplexing (FDM) approach that expands the control channel into a physical shared channel region has been proposed. FIG. 6 is a diagram illustrating an example of an E-PDCCH by the FDM approach. As illustrated in FIG. 6, the FDM approach expands the PDCCH by applying frequency multiplexing of the PDCCH that is one of the control channels to the RB of the PDSCH that is the shared channel. Hereinafter, the PDCCH expanded into the physical shared channel region is called E-PDCCH.

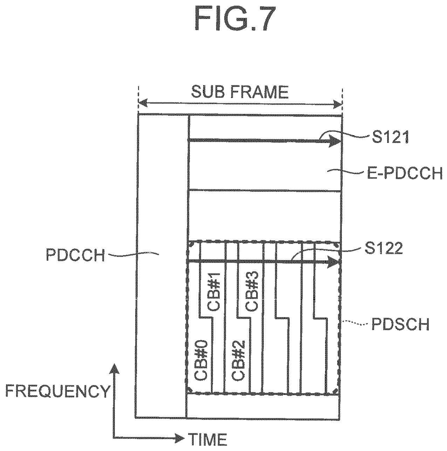

Here, problems associated with introduction of an E-PDCCH will be described. FIG. 7 is a diagram for describing problems associated with introduction of the E-PDCCH. As illustrated in FIG. 7, in the FDM approach, it is assumed that the E-PDCCH is arranged in an entire single sub frame (for example, the sub frame #n) in a distributed manner together with a normal PDCCH.

Note that, in the aspect of FIG. 7, the mobile station demodulates the control signal in the E-PDCCH, and acquires the resource allocation information related to the PDSCH only after receiving a signal of the one sub frame (S121). That is, in the aspect of FIG. 7, the mobile station cannot acquire the resource allocation information related to the PDSCH until completion of reception of the signal of the one sub frame, and cannot start the demodulation of the data signal in the PDSCH. Therefore, in the aspect of FIG. 7, to complete the demodulation of the data signal within a limited time, the mobile station executes the demodulation of the data signal in the PDSCH at a high speed (S122).

That is, in the aspect of FIG. 7, a load associated with the demodulation of the data signal at the mobile station side may be increased. Therefore, in the present embodiment, a method of transmitting the E-PDCCH has been improved so that a load associated with the demodulation of the data signal at the mobile station side can be reduced.

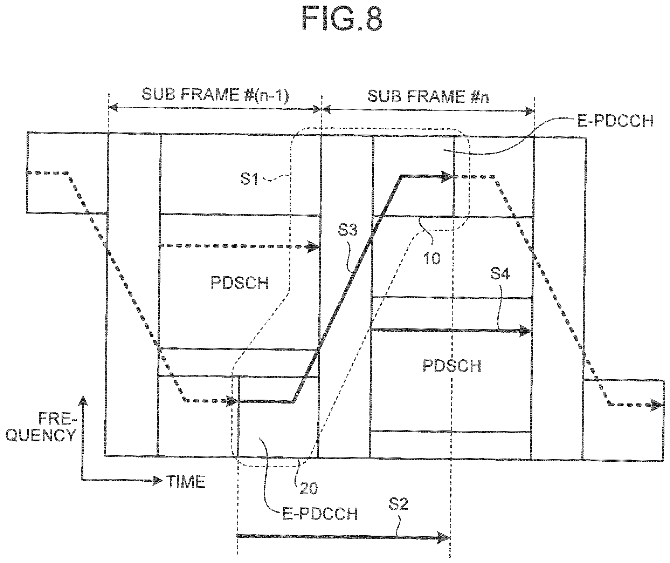

Next, the wireless communication method (a method of transmitting an E-PDCCH) in the wireless communication system according to the present embodiment will be described. FIG. 8 is a diagram for describing a principle of the method of transmitting an E-PDCCH in the wireless communication system according to the first embodiment. In FIG. 8, the E-PDCCH is arranged in an RB of a given sub frame #n and an RB of a previous sub frame #(n - 1) to the sub frame #n in a distributed manner.

In the present embodiment, the base station 100 first allocates a resource across the sub frame #n and the sub frame #(n - 1), in which a data signal is transmitted, to the E-PDCCH including the resource allocation information related to the data signal in the PDSCH (S1). Here, the base station 100 allocates, among the resources, the resource to the E-PDCCH such that a region 10 corresponding to the sub frame #n and a region 20 corresponding to the sub frame #(n - 1) are discontinuous in the frequency direction. Then, the base station 100 transmits a control signal in the E-PDCCH to the mobile station 200 using the resource allocated to the E-PDCCH (S2) .

Next, the mobile station 200 receives the E-PDCCH (control signal) transmitted from the base station 100 using the resource across the sub frame #n and the sub frame #(n - 1). Then, the mobile station 200 demodulates the received E-PDCCH, and acquires the resource allocation information related to the PDSCH (S3). Note that, at this point, reception of a signal of one sub frame #n has not been completed.

Next, the mobile station 200 demodulates the PDSCH based on the acquired resource allocation information (S4). That is, the mobile station 200 can start demodulation of the data signal in the PDSCH although not completing reception of a signal of the one sub frame #n at the timing (S3) when the mobile station 200 has acquired the resource allocation information. Thus, in the present embodiment, a load associated with the demodulation of the data signal at the mobile station 200 side can be reduced.

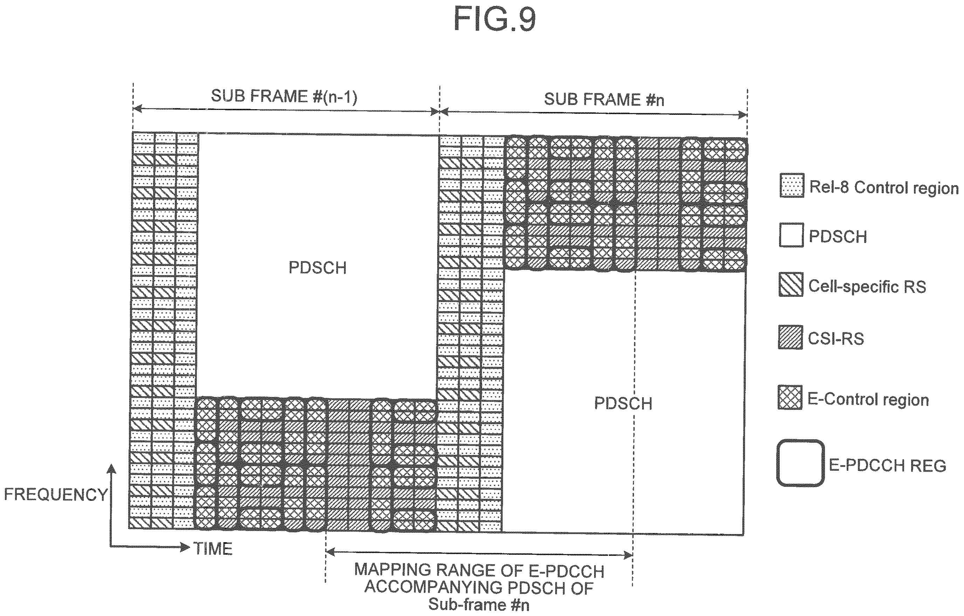

Here, a specific arrangement example of a resource across the sub frame #n and the sub frame #(n - 1) will be described. Hereinafter, a resource across the sub frame #n and the sub frame #(n - 1) is defined as an E-Control region. FIG. 9 is a diagram illustrating an arrangement example of the E-Control region in the first embodiment. Note that FIG. 9 illustrates a state in which the number of transmission antennas is four and three OFDM symbols are used as Release 8 Control region.

In FIG. 9, as for the Cell-specific RSs, the number of REs to be used is different according to the number of transmission antennas, and the mapping positions are shifted in the frequency direction according to the cell ID. Further, as for the channel state information (CSI)-RS for measuring channel quality, the REs to be used are limited to a part of the REs, and patterns such as a transmission cycle is set by an upper layer. Therefore, there are REGs not used by other physical channels. In a range of the REGs, a time range in which the E-PDCCH corresponding to the PDSCH of the sub frame #n is mapped is set as the E-Control region. The E-Control region is, for example, set as an upper layer. In the example of FIG. 9, a time range from five OFDM symbols behind the sub frame #(n - 1) to nine OFDM symbols in front of the sub frame #n is set as the E-Control region.

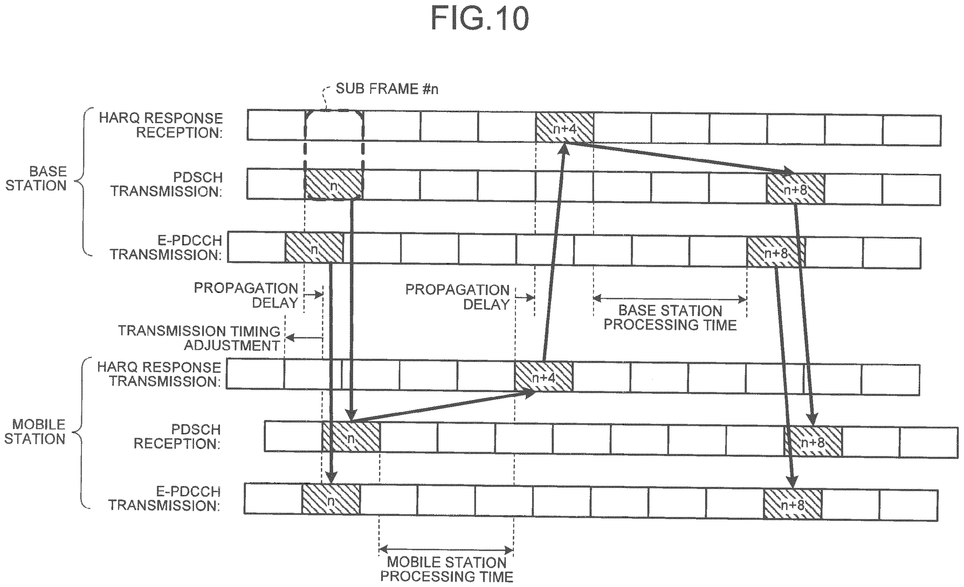

Here, the HARQ process when the method of transmitting an E-PDCCH of the present embodiment is executed will be described. FIG. 10 is a diagram indicating a time relationship between transmission/reception of a downlink shared channel PDSCH and transmission/reception of an HARQ response in the HARQ process in the first embodiment.

In FIG. 10, similarly to the case of FIG. 4, it is desired that the demodulation of the PDSCH is completed within a limited time from the end of the sub frame #n to the head of the sub frame #(n + 4) at the mobile station 200 side. In such circumstances, the wireless communication system of the present embodiment executes the above-described method of transmitting an E-PDCCH. That is, the mobile station 200 receives the E-PDCCH transmitted from the base station 100 using the resource across the sub frame #n and the sub frame #(n - 1). The mobile station 200 then demodulates the received E-PDCCH, and acquires the resource allocation information related to the PDSCH. Accordingly, the mobile station 200 can start the demodulation of the data signal in the PDSCH although not completing reception of a signal of one sub frame #n at the timing when the mobile station 200 has acquired the resource allocation information. In other words, the mobile station 200 can make the start timing of the demodulation of the PDSCH earlier. Therefore, the mobile station 200 can sufficiently ensure a time allowed for the demodulation of the data signal in the PDSCH, and as a result, a load associated with the demodulation of the data signal at the mobile station 200 side can be reduced.

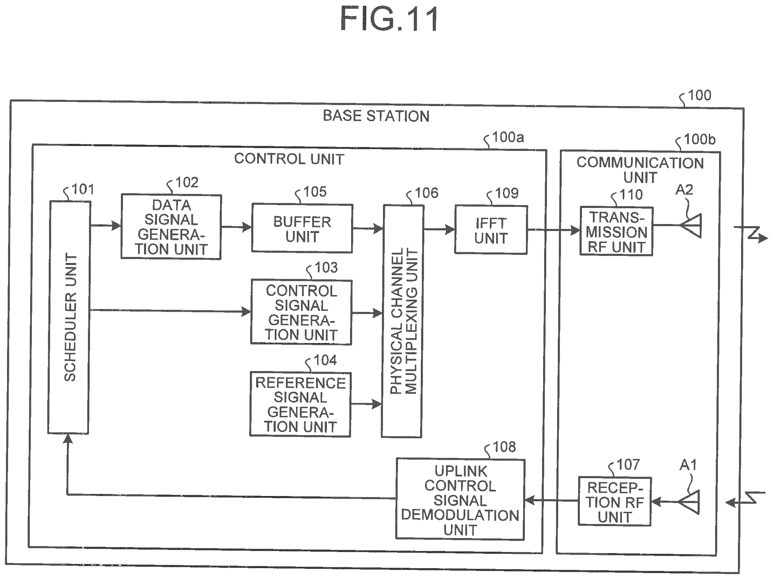

Next, a configuration of a wireless communication system that realizes the wireless communication method (the method of transmitting an E-PDCCH) of the present embodiment will be described. FIG. 11 is a diagram illustrating a configuration the base station 100 according to the first embodiment. As illustrated in FIG. 11, the base station 100 includes a control unit 100a and a communication unit 100b. The control unit 100a includes a scheduler unit 101, a data signal generation unit 102, a control signal generation unit 103, a reference signal generation unit 104, and a buffer unit 105. Further, the control unit 100a includes a physical channel multiplexing unit 106, an uplink control signal demodulation unit 108, and an inversed fast Fourier transform unit (IFFT) 109. The communication unit 100b includes a reception radio frequency (RF) unit 107 and a transmission RF unit 110. These configuration elements are unidirectionally or bidirectionally connected so as to be able to input/output signals and data. Note that, in a physical sense, the control unit 100a is configured from a digital circuit, a digital signal processor (DSP), a central processing unit (CPU), and the like, and the communication unit 100b is configured from an analog circuit including an amplifier and a filter, and the like.

The scheduler unit 101 performs user scheduling processing of the E-PDCCH and the PDSCH based on the channel quality information (channel quality indicator (CQI)) notified from the mobile stations. To be specific, the scheduler unit 101 performs processing of allocating a frequency resource to a control signal and a data signal for each mobile station, a processing of selecting modulation and coding scheme (MCS), a processing of determining information bit number, as the user scheduling processing. Further, the scheduler unit 101 allocates the E-Control region to the E-PDCCH when performing the user scheduling processing. The scheduler unit 101 then outputs a result of the user scheduling processing as resource allocation information. The resource allocation information is an example of information used for the demodulation of the data signal. Examples of the information used for the demodulation of the data signal include the resource allocation information, MCS information, a demodulation system, a coding rate, and information of applied precoding, for example.

The data signal generation unit 102 generates a data signal in the PDSCH based on the resource allocation information and the user data. The control signal generation unit 103 generates a control signal in the E-PDCCH and the like based on the control information including the resource allocation information. The reference signal generation unit 104 generates a reference signal.

The buffer unit 105 delays the PDSCH by a predetermined time so that a transmission timing of the E-PDCCH including the resource allocation information related to the PDSCH becomes earlier than that of the PDSCH. The physical channel multiplexing unit 106 applies frequency multiplexing of each physical channel.

The reception RF unit 107 performs conversion of a received uplink signal from a radio frequency to a base band, and performs orthogonal demodulation and analog to digital (A/D) conversion. The reception RF unit 107 includes an antenna A1, and receives an uplink signal. The uplink control signal demodulation unit 108 demodulates the uplink control signal, and restores the CQI that is the control information. The IFFT unit 109 performs inverse Fourier transform (IFFT), and adds cyclic prefix (CP). The transmission RF unit 110 performs conversion from the base band to the radio frequency as well as performing D/A conversion and orthogonal demodulation, amplifies the power, and transmits a downlink signal. The transmission RF unit 110 includes an antenna A2, and transmits the downlink signal.

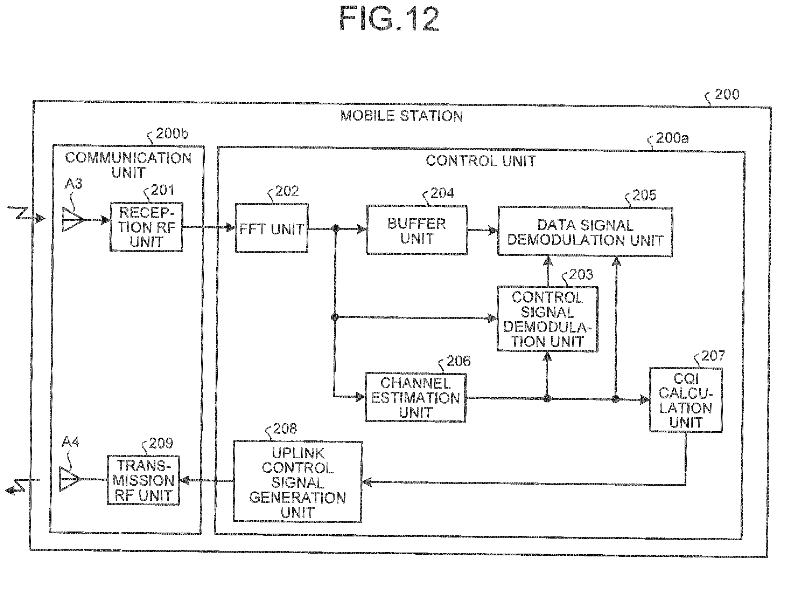

Next, a configuration of the mobile station 200 will be described. FIG. 12 is a diagram illustrating a configuration of the mobile station 200 according to the first embodiment. The mobile station 200 includes a control unit 200a and a communication unit 200b. The control unit 200a includes an FFT unit 202, a control signal demodulation unit 203, a buffer unit 204, a data signal demodulation unit 205, a channel estimation unit 206, a CQI calculation unit 207, and an uplink control signal generation unit 208. The communication unit 200b includes a reception RF unit 201 and a transmission RF unit 209. These configuration elements are unidirectionally or bidirectionally connected so as to be able to input/output signals and data.

The reception RF unit 201 performs conversion of the received downlink signal from a radio frequency to a base band, and performs orthogonal demodulation and analog to digital (A/D) conversion. The reception RF unit 201 receives the downlink signal from an antenna A3. The FFT unit 202, similarly to a typical OFDM system, detects a cut-out timing of the received signal and removes the CP, and then converts a detection result into a received signal in a frequency region by Fourier transform (FFT).

The control signal demodulation unit 203 restores the resource allocation information as the control information by extracting the E-PDCCH embedded in the E-Control region from the received signal, and demodulating the control signal in the E-PDCCH based on a channel estimation value. The control signal demodulation unit 203 notifies the data signal demodulation unit 205 of the restored resource allocation information.

The buffer unit 204 holds the received signal in a period in which the control signal in the E-PDCCH is being demodulated.

The data signal demodulation unit 205 restores data information by extracting the data signal from the received signal based on the resource allocation information, and decoding the data signal based on the channel estimation value. The data information includes user data.

The channel estimation unit 206 acquires the channel estimation value by correlating a reference signal extracted from the received signal and a replica of a known reference signal. The CQI calculation unit 207 calculates channel quality information (CQI) using the channel estimation value of the cell with which the mobile station 200 is connected. The uplink control signal generation unit 208 generates an uplink control signal based on the control information configured from the CQI and the like. The transmission RF unit 209 performs D/A (digital to analog) conversion and orthogonal demodulation, then performs conversion from the base band to the radio frequency, amplifies the power, and transmits an uplink signal. The transmission RF unit 209 transmits the uplink signal by an antenna A4. Note that the control unit 200a is configured from a digital circuit, a DSP, a CPU, and the like, and the communication unit 200b is configured from an analog circuit including an amplifier and a filter, and the like, in a physical sense.

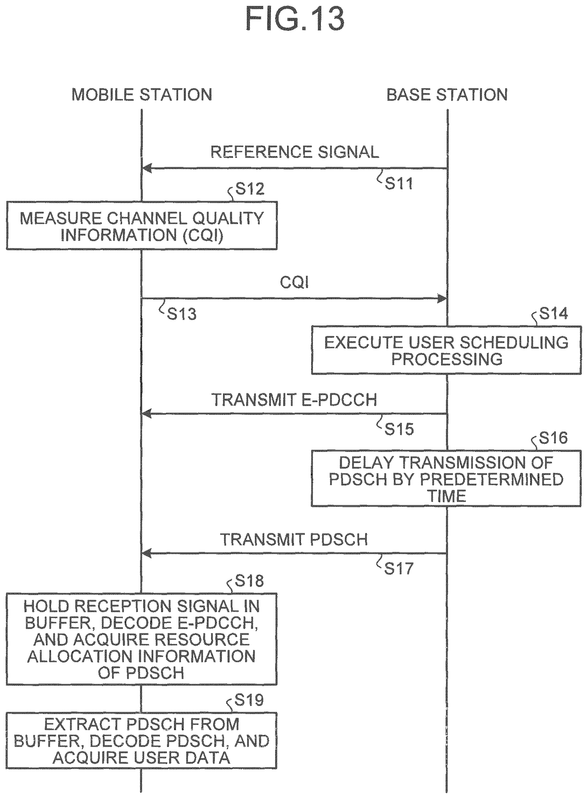

Next, an operation will be described. In the present embodiment, assume a wireless communication system in which the base station 100 and the mobile station 200 transmits/receives a data signal and a control signal using various physical channels, as illustrated in FIG. 1. FIG. 13 is a diagram illustrating an operation of the wireless communication system according to the first embodiment. Note that, hereinafter, the mobile station 200 is connected with a cell of the base station 100, and the cell of the base station 100, with which the mobile station 200 is connected, is called serving cell.

In S11, the base station 100 transmits a reference signal. In S12, the mobile station 200 measures reception quality of the reference signal of the serving cell as the channel quality information (CQI). In S13, the mobile station 200 reports the CQI to the base station 100.

In S14, the base station 100 performs user scheduling processing of the E-PDCCH and the PDSCH based on the CQI reported from the mobile station 200. To be specific, when performing the user scheduling processing, the base station 100 allocates the E-Control region to the E-PDCCH including the resource allocation information related to the PDSCH. For example, the base station 100 allocates the E-Control region such that a region corresponding to the sub frame #n and a region corresponding to the sub frame #(n - 1) are discontinuous in the frequency direction.

In S15, the base station 100 transmits the E-PDCCH using the E-Control region. In S16, the base station 100 delays the transmission of the PDSCH by a predetermined time so that a transmission timing of the E-PDCCH becomes earlier than that of the PDSCH. In S17, the base station 100 transmits the PDSCH.

In S18, the mobile station 200 temporarily holds the control signal in the E-PDCCH transmitted in S15 and the data signal in the PDSCH transmitted in S17 in the buffer unit 204 as received signals. Further, the mobile station 200 decodes the E-PDCCH embedded in the E-Control region from the received signal, and acquires the resource allocation information related to the PDSCH. That is, the mobile station 200 can acquire the resource allocation information related to the PDSCH before completion of reception of a signal of a sub frame for PDSCH transmission by decoding the E-PDCCH using the E-Control region.

In S19, the mobile station 200 obtains user data by extracting the PDSCH from the received signal held in the buffer unit 204, and decoding the data signal, based on the resource allocation information related to the PDSCH. That is, the mobile station 200 can start the demodulation of the data signal in the PDSCH early by acquiring the resource allocation information related to the PDSCH before completion of reception of a signal of a sub frame for PDSCH transmission. Accordingly, a load associated with the demodulation of the data signal at the mobile station 200 side can be reduced.

As described above, the wireless communication system according to the first embodiment includes the base station 100 and the mobile station 200 that transmit/receive a data signal and a control signal. The base station 100 includes the control unit 100a and a communication unit 100b. The control unit 100a allocates the E-Control region that is a resource across the sub frame that transmits the PDSCH and the previous sub frame to the E-PDCCH including the resource allocation information related to the PDSCH. The communication unit 100b transmits the E-PDCCH to the mobile station 200 using the E-Control region. The mobile station 200 includes the communication unit 200b and the control unit 200a. The communication unit 200b receives the E-PDCCH transmitted from the base station 100 using the E-Control region. The control unit 200a demodulates the PDSCH based on the resource allocation information related to the PDSCH included in the E-PDCCH. Accordingly, the wireless communication system can reduce a load associated with the demodulation of the data signal at the mobile station 200 side.

Further, in the first embodiment, the control unit 100a of the base station 100 allocates the E-Control region to the E-PDCCH such that a region corresponding to a certain sub frame and a region corresponding to a previous sub frame are discontinuous in the frequency direction. Accordingly, one single E-PDCCH can be propagated using wireless channels in two frequency bands separated from each other. As a result, a frequency diversity gain can be improved.

### [Second Embodiment]

In a second embodiment, an example of applying a technology of adaptively controlling an E-Control region to be allocated to an E-PDCCH to the wireless communication system according to the first embodiment will be described. That is, in the first embodiment, the base station 100 of the wireless communication system allocates the E-Control region of a single pattern to the E-PDCCH for each mobile station. However, if the E-Control region is fixedly allocated regardless of the type of the mobile station, there is a concern of an increase in a load at the side of the base station 100 that makes the transmission timing of the E-PDCCH earlier when the processing capacity of the mobile station that is an object to receive the E-PDCCH is low, for example. Therefore, in a wireless communication system according to the present embodiment, the pattern of the E-Control region is controlled according to the type of the mobile station.

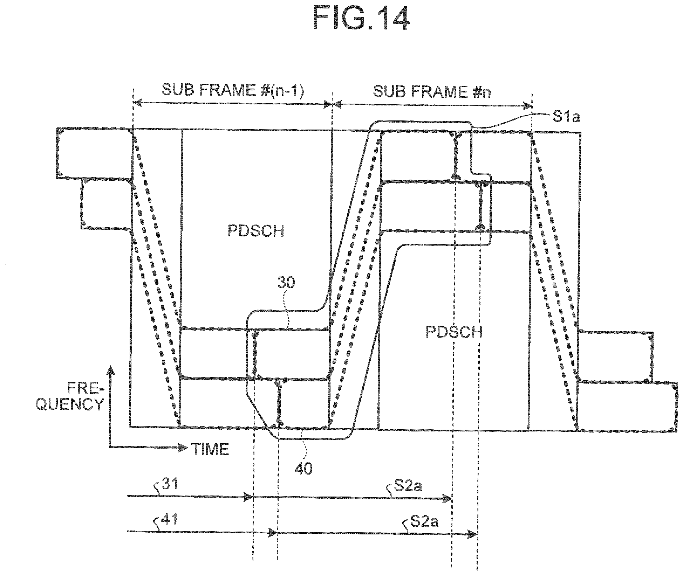

First, a wireless communication method (a method of transmitting an E-PDCCH) in a wireless communication system according to a present embodiment will be described. FIG. 14 is a diagram for describing a principle of a method of transmitting an E-PDCCH in a wireless communication system according to the second embodiment.

A base station of a wireless communication system according to the present embodiment holds, in a predetermined storage unit, patterns of two E-Control regions 30 and 40 having different start positions in a sub frame according to user equipment (UE) category of a mobile station. Here, the UE category is an index indicating processing capacity of the mobile station defined in the LTE (see 3GPP TS 36.306 V10.2.0 (2011-06)). In the LTE, a plurality of UE categories is set according to the buffer size of the mobile station. Therefore, a mobile station having a higher UE category, that is, having a larger buffer size, has a larger processing amount associated with demodulation of a PDSCH. On the other hand, a mobile station having a lower UE category, that is, having a smaller buffer size, has a smaller processing amount associated with demodulation of the PDSCH.

In FIG. 14, the E-Control region 30 is a resource corresponding to a mobile station having a higher UE category than a predetermined value. A start position of the E-Control region 30 is set to a front position 31 in a sub frame #(n - 1). Further, the E-Control region 40 is a resource corresponding to a mobile station in which the UE category is a predetermined value or less. The E-Control region 40 is set to a position 41 behind the position 31 in the sub frame #(n - 1).

In the present embodiment, the base station first selects, from a storage unit, an E-Control region corresponding to a UE category notified from the mobile station, and allocates the E-Control region to an E-PDCCH (S1a). To be specific, when the UE category is higher than a predetermined value, the base station selects the E-Control region 30 and allocates the E-Control region 30 to the E-PDCCH. Meanwhile, when the UE category is the predetermined value or less, the base station selects the E-Control region 40 and allocates the E-Control region 40 to the E-PDCCH.

Next, the base station transmits the E-PDCCH to the mobile station using the selected E-Control region (S2a). To be specific, the base station transmits the E-PDCCH to the mobile station having a higher UE category than a predetermined value using the E-Control region 30. Accordingly, a mobile station having a higher UE category and a large processing amount associated with demodulation of the PDSCH has an earlier transmission timing of the E-PDCCH from the base station, and as a result, the mobile station can make a start timing of the demodulation of the PDSCH earlier. Meanwhile, the base station transmits the E-PDCCH to the mobile station in which the UE category is the predetermined value or less using the E-Control region 40. Accordingly, a mobile station having a lower UE category and a smaller processing amount associated with demodulation of the PDSCH has a later transmission timing of the E-PDCCH from the base station, and as a result, a load associated with the transmission of the E-PDCCH at the base station side can be reduced.

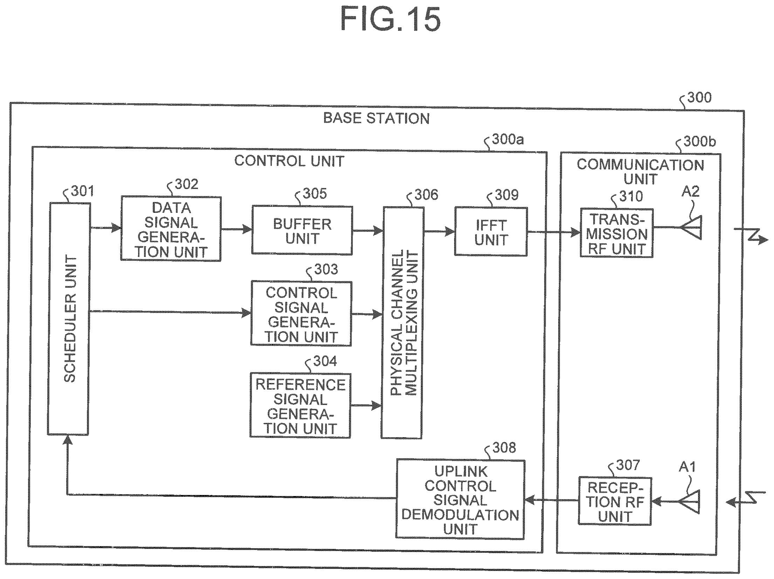

Next, a configuration of a wireless communication system that realizes a wireless communication method (a method of transmitting an E-PDCCH) of the present embodiment will be described. FIG. 15 is a diagram illustrating a configuration of a base station 300 according to the second embodiment. As illustrated in FIG. 15, the base station 300 includes a control unit 300a and a communication unit 300b. The control unit 300a includes a scheduler unit 301, a data signal generation unit 302, a control signal generation unit 303, a reference signal generation unit 304, and a buffer unit 305. Further, the control unit 300a includes a physical channel multiplexing unit 306, an uplink control signal demodulation unit 308, and an IFFT unit 309. The communication unit 300b includes a reception RF unit 307 and a transmission RF unit 310. These configuration elements are unidirectionally or bidirectionally connected so as to be able to input/output signals and data. Note that, in a physical sense, the control unit 300a is configured from a digital circuit, a digital signal processor (DSP), a central processing unit (CPU), and the like, and the communication unit 300b is configured from an analog circuit including an amplifier and a filter, and the like.

The base station 300 according to the second embodiment has a configuration similar to the base station 100 according to the first embodiment. Therefore, a similar configuration element is denoted with a reference sign having the same end, and detailed description thereof is omitted.

To be specific, the base station 300 according to the second embodiment corresponds to the base station 100 according to the first embodiment. Further, the control unit 300a and the communication unit 300b of the base station 300 correspond to the control unit 100a and the communication unit 100b of the base station 100, respectively. Further, the scheduler unit 301, the data signal generation unit 302, and the control signal generation unit 303 of the base station 300 correspond to the scheduler unit 101, the data signal generation unit 102, and the control signal generation unit 103 of the base station 100, respectively. Further, the reference signal generation unit 304 and the buffer unit 305 correspond to the reference signal generation unit 104 and the buffer unit 105, respectively. Further, the physical channel multiplexing unit 306, the uplink control signal demodulation unit 308, and the IFFT unit 309 correspond to the physical channel multiplexing unit 106, the uplink control signal demodulation unit 108, and the IFFT unit 109, respectively. Further, the reception RF unit 307 and the transmission RF unit 310 correspond to the reception RF unit 107 and the transmission RF unit 110, respectively.

Here, principal differences between the base station 300 according to the second embodiment and the base station 100 according to the first embodiment will be described. The control signal demodulation unit 308 demodulates an uplink control signal, restores a CQI and a UE category, which are control information, and notifies the restored control information to the scheduler unit 301.

The scheduler unit 301 holds, in an internal storage unit, a plurality of E-Control regions having different start positions in a sub frame, according to the UE category. The scheduler unit 301 selects, from the internal storage unit, an E-Control region corresponding to the UE category notified from the control signal demodulation unit 308 when performing user scheduling processing. The scheduler unit 301 ensures an E-PDCCH resource from the selected E-Control region. Further, the scheduler unit 301 transfers a search space (SS) switch instruction including identification information of the E-Control region to the data signal generation unit 302 as information transferred using the PDSCH. The SS switch instruction instructs switching of SS, which is a range of resources searched by the mobile station at decoding of the E-PDCCH, to the E-Control region.

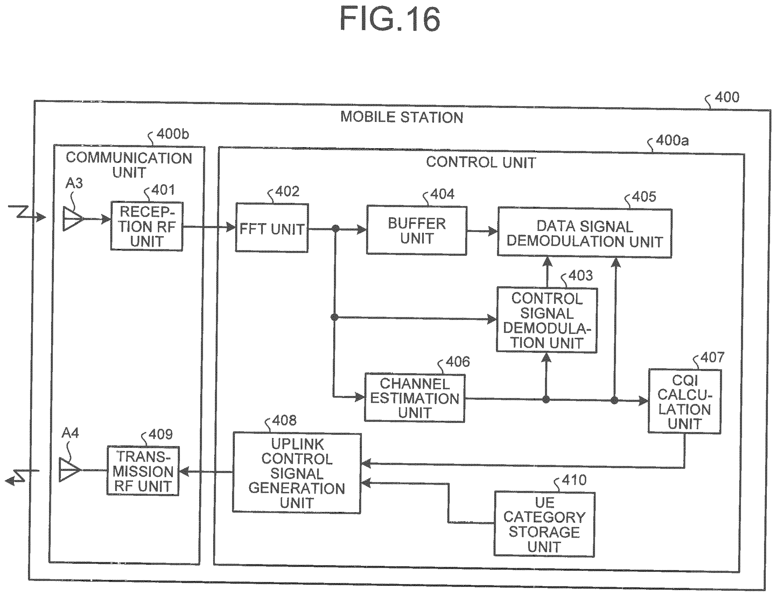

FIG. 16 is a diagram illustrating a configuration of a mobile station 400 according to the second embodiment. As illustrated in FIG. 16, the mobile station 400 includes a control unit 400a and a communication unit 400b. The control unit 400a includes an FFT unit 402, a control signal demodulation unit 403, a buffer unit 404, a data signal demodulation unit 405, a channel estimation unit 406, a CQI calculation unit 407, an uplink control signal generation unit 408, and a UE category storage unit 410. The communication unit 400b includes a reception RF unit 401 and a transmission RF unit 409. These configuration elements are unidirectionally or bidirectionally connected so as to be able to input/output signals and data. Note that, in a physical sense, the control unit 400a is configured from a digital circuit, a digital signal processor (DSP), a central processing unit (CPU), and the like, and the communication unit 400b is configured from an analog circuit including an amplifier and a filter, and the like.

The mobile station 400 according to the second embodiment has a similar configuration to the mobile station 200 of the first embodiment. Therefore, a similar configuration element is denoted with a reference sign having the same end, and detailed description thereof is omitted.

To be specific, the mobile station 400 according to the second embodiment corresponds to the mobile station 200 according to the first embodiment. Further, the control unit 400a and the communication unit 400b of the mobile station 400 correspond to the control unit 200a and the communication unit 200b of the mobile station 200, respectively. Further, the FFT unit 402, the control signal demodulation unit 403 the buffer unit 404, and the data signal demodulation unit 405 of the mobile station 400 correspond to the FFT unit 202, the control signal demodulation unit 203, the buffer unit 204, and the data signal demodulation unit 205 of the mobile station 200, respectively. Further, the channel estimation unit 406, the CQI calculation unit 407, and the uplink control signal generation unit 408 correspond to the channel estimation unit 206, the CQI calculation unit 207, and the uplink control signal generation unit 208, respectively. Further, the reception RF unit 401 and the transmission RF unit 409 correspond to the reception RF unit 201 and the transmission RF unit 209, respectively.

Here, principal differences between the mobile station 400 according to the second embodiment and the mobile station 200 according to the first embodiment will be described. The UE category storage unit 410 stores the UE category. The uplink control signal generation unit 408 generates an uplink control signal based on the control information configured from the UE category read out from the UE category storage unit 410 and the CQI.

The data signal demodulation unit 405 restores the user data and the SS switch instruction by extracting a data signal from the received signal, and decoding the data signal based on a channel estimation value. When having restored the SS switch instruction, the data signal demodulation unit 405 notifies the control signal demodulation unit 403 of the restored SS switch instruction.

The control signal demodulation unit 403 restores the resource allocation information by searching the E-Control region instructed by the SS switch instruction and demodulating the E-PDCCH. The control signal demodulation unit 403 notifies the data signal demodulation unit 405 of the restored resource allocation information.

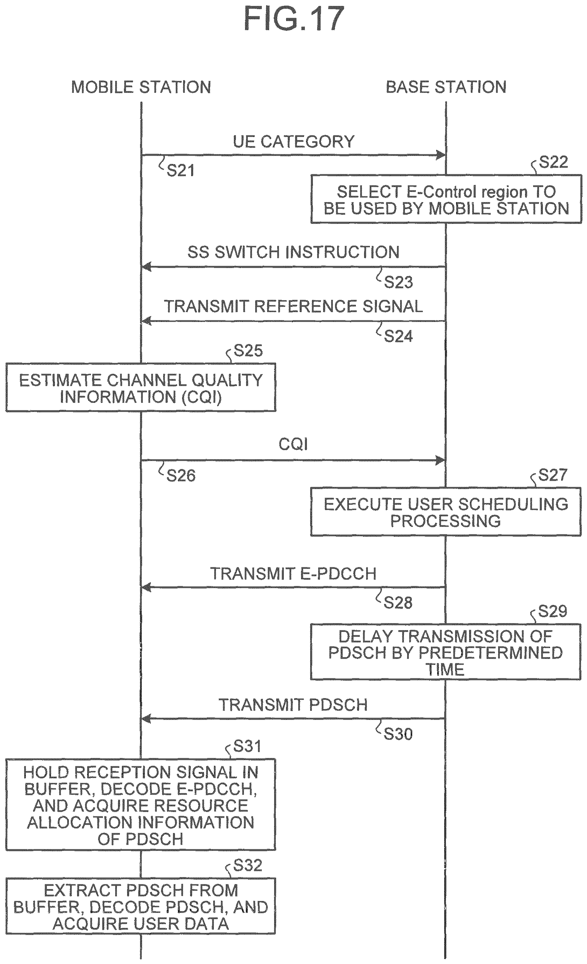

Next, an operation will be described. In the present Embodiment, assume a wireless communication system in which the base station 300 and the mobile station 400 transmit/receive a data signal and a control signal using various physical channels. FIG. 17 is a diagram illustrating an operation of the wireless communication system according to the second embodiment. Note that, hereinafter, the mobile station 400 is connected with a cell of the base station 300, and the cell of the base station 300 with which the mobile station 400 is connected is called serving cell.

In S21, the mobile station 400 reads out the UE category from the UE category storage unit 410, and notifies the base station 300 of the UE category.

In S22, the base station 300 selects the E-Control region corresponding to the UE category notified from the mobile station 400 from the internal storage unit. In the example of FIG. 14, the base station 300 selects the E-Control region 30 when the UE category of the mobile station 400 is higher than a predetermined value. Meanwhile, the base station 300 selects the E-Control region 40 when the UE category of the mobile station 400 is a predetermined value or less.

In S23, the base station 300 notifies the mobile station 400 of the SS switch instruction including identification information of the E-Control region selected in S22.

In S24, the base station 300 transmits a reference signal. In S25, the mobile station 400 estimates reception quality of the reference signal of the serving cell as channel quality information (CQI). In S26, the mobile station 400 reports the CQI to the base station 300.

In S27, the base station 300 performs user scheduling processing of the E-PDCCH and the PDSCH based on the CQI reported from the mobile station 400. To be specific, the base station 300 ensures a resource for the E-PDCCH from the E-Control region selected in S22 when performing user scheduling processing.

In S28, the base station 300 transmits the E-PDCCH using the E-Control region. In the example of FIG. 14, the base station transmits the E-PDCCH to the mobile station 400 having a higher UE category than a predetermined value using the E-Control region 30. Meanwhile, the base station 300 transmits the E-PDCCH to the mobile station 400 having the UE category being the predetermined value or less using the E-Control region 40.

In S29, the base station 300 delays the transmission of the PDSCH by a predetermined time so that a transmission timing of the E-PDCCH becomes earlier than that of the PDSCH. In S30, the base station 300 transmits the PDSCH.

In S31, the mobile station 400 temporarily holds the control signal in the E-PDCCH transmitted in S28 and the data signal in the PDSCH transmitted in S30 in the buffer unit 404 as received signals. Further, the mobile station 400 searches the E-Control region instructed by the SS switch instruction notified from the base station 300 in S23, decodes the E-PDCCH, and acquires the resource allocation information related to the PDSCH. That is, the mobile station 400 can acquire the resource allocation information related to the PDSCH before completion of reception of a signal of a sub frame for PDSCH transmission by decoding the E-PDCCH using the E-Control region. Accordingly, the mobile station 400 having a higher UE category and a larger processing amount associated with demodulation of the PDSCH can have an earlier transmission timing of the E-PDCCH from the base station 300. As a result, the mobile station 400 can make the start timing of the demodulation of the PDSCH earlier. Meanwhile, the mobile station 400 having a lower UE category and a smaller processing amount associated with the demodulation of the PDSCH can have a later transmission timing of the E-PDCCH from the base station 300. As a result, a load associated with the transmission of the E-PDCCH at the base station 300 side can be reduced.

In S32, the mobile station 400 obtains user data by extracting the PDSCH from the received signal held in the buffer unit 404 and decoding the data signal based on the resource allocation information related to the PDSCH. That is, the mobile station 400 can start the demodulation of the data signal in the PDSCH earlier by acquiring the resource allocation information related to the PDSCH before completion of reception of a signal of a sub frame for PDSCH transmission. Accordingly, a load associated with the demodulation of the data signal at the mobile station 400 side can be reduced.

As described above, the wireless communication system according to the second embodiment includes the base station 300 and the mobile station 400. The base station 300 includes the control unit 300a and the communication unit 300b. The control unit 300a holds, in the internal storage unit, patterns of a plurality of E-Control regions having different start positions in a sub frame according to a UE category. The control unit 300a selects the E-Control region corresponding to the UE category notified from the mobile station 400 from the storage unit, and allocates the selected E-Control region to the E-PDCCH. The communication unit 300b transmits the E-PDCCH to the mobile station 400 using the E-Control region. Accordingly, the mobile station 400 having a higher UE category and a larger processing amount associated with the demodulation of the PDSCH can have an earlier transmission timing of the E-PDCCH from the base station 300. As a result, the mobile station 400 can make the start timing of the demodulation of the PDSCH earlier. Meanwhile, the mobile station 400 having a lower UE category and a larger processing amount associated with the demodulation of the PDSCH can have a later transmission timing of the E-PDCCH from the base station 300. As a result, a load associated with the transmission of the E-PDCCH at the base station 300 side can be reduced.

### [Explanation of Reference]

- 100, 300: Base station
- 100a, 300a: Control unit
- 100b, 300b: Communication unit
- 101, 301: Scheduler unit
- 102, 302: Data signal generation unit
- 103, 303: Control signal generation unit
- 104, 304: Reference signal generation unit
- 105, 305: Buffer unit
- 106, 306: Physical channel multiplexing unit
- 107, 307: Reception RF unit
- 108, 308: Uplink control signal demodulation unit
- 109, 309: IFFT unit
- 110, 310: Transmission RF unit
- 200, 400: Mobile station
- 200a, 400a: Control unit
- 200b, 400b: Communication unit
- 201, 401: Reception RF unit
- 202, 402: FFT unit
- 203, 403: Control signal demodulation unit
- 204, 404: Buffer unit
- 205, 405: Data signal demodulation unit
- 206, 406: Channel estimation unit
- 207, 407: CQI calculation unit
- 208, 408: Uplink control signal generation unit
- 209, 409: Transmission RF unit
- 410 UE: category storage unit

## Claims

1. A wireless base station (100, 300) configured to transmit a data signal and a control signal including information for demodulation of the data signal, wherein the wireless base station (100, 300) includes a first communication unit (100b, 300b) configured to transmit the control signal to a mobile station (200, 400) using a resource,
**characterized by** the wireless base station (100, 300) comprising
a first control unit (100a, 300a) configured to allocate the resource to be used by the first communication unit (100b, 300b) to the control signal including information used for demodulation of the data signal across a time section in which the data signal is transmitted and a previous time section which precedes the time section and in which a further data signal different from the data signal is transmitted.

2. A wireless communication system comprising the wireless base station of claim 1, further comprising a wireless mobile station (200, 400) configured to receive the data signal and the control signal, wherein
the wireless mobile station (200, 400) includes
a second communication unit (200b, 400b) configured to receive the control signal transmitted from the base station (100, 300) using the resource across the time section and the previous time section, and
a second control unit (200a, 400a) configured to demodulate the data signal based on the information included in the control signal.

3. The wireless communication system according to claim 2, wherein the first control unit (100a, 300a) of the wireless base station (100, 300) is configured to allocate the resource to the control signal such that a region corresponding to the time section and a region corresponding to the previous time section are discontinuous in a frequency direction, from among the resources.

4. The wireless communication system according to claim 3, wherein the first control unit (300a) of the wireless base station (300) is configured:
to store, in a storage unit, patterns of a plurality of resources having different start positions in the previous time section according to a user equipment category that is an index indicating processing capacity of the wireless mobile station (400), and
to select, from the storage unit, the resource corresponding to the user equipment category notified from the wireless mobile station (400), and to allocate the selected resource to the control signal, and
the first communication unit (300b) of the wireless base station (300) is configured to transmit the control signal to the wireless mobile station (400) using the resource.

5. The wireless communication system according to claim 4, wherein the wireless base station (300) is configured such that:
the start position of the resource corresponding to the user equipment category that is higher than a predetermined value is set to a first position in the previous time section, and
the start position of the resource corresponding to the user equipment category that is the predetermined value or less is set to a second position preceding the first position in the previous time section.

6. The wireless communication system according to claim 4, wherein the first communication unit (300b) of the wireless base station (300) is configured to notify the wireless mobile station (400) of a search space switch instruction instructing switching of a search space specific to the wireless mobile station (400) to the resource selected by the first control unit (300a), and
the second control unit (400a) of the wireless mobile station (400) is configured to acquire the information included in the control signal by searching the resource instructed by the search space switch instruction notified from the wireless base station (300), and to demodulate the control signal.

## Patentansprüche

1. Drahtlose Basisstation (100, 300), die dazu ausgelegt ist, ein Datensignal und ein Steuersignal, das Informationen zum Demodulieren des Datensignals enthält, zu übertragen, wobei die drahtlose Basisstation (100, 300) eine erste Kommunikationseinheit (100b, 300b), die zum Übertragen des Steuersignals zu einer Mobilstation (200, 400) unter Verwendung einer Ressource ausgelegt ist, aufweist,
**dadurch gekennzeichnet, dass** die drahtlose Basisstation (100, 300) eine erste Steuereinheit (100a, 300a), aufweist, die dazu ausgelegt ist, die Ressource, die von der ersten Kommunikationseinheit (100b, 300b) verwendet werden soll, dem Steuersignal, das Informationen, die zum Demodulieren des Datensignals verwendet werden, enthält, über einen Zeitabschnitt, in dem die Daten übertragen werden, und einen Zeitabschnitt, der dem Zeitabschnitt vorausgeht und in dem ein weiteres Datensignal, das sich von dem Datensignal unterscheidet, übertragen wird, zuzuordnen.

2. Drahtloses Kommunikationssystem, das die drahtlose Basisstation nach Anspruch 1 aufweist und ferner eine drahtlose Mobilstation (200, 400) aufweist, die dazu ausgelegt ist, das Datensignal und das Steuersignal zu empfangen, wobei
die drahtlose Mobilstation (200, 400) eine zweite Kommunikationseinheit (200b, 400b) aufweist, die dazu ausgelegt ist, das Steuersignal, das von der Basisstation (100, 300) unter Verwendung der Ressource über den Zeitabschnitt und den vorhergehenden Zeitabschnitt übertragen wird, zu empfangen, und
eine zweite Steuereinheit (200a, 400a), die dazu ausgelegt ist, das Datensignal basierend auf den Informationen, die in dem Steuersignal enthalten sind, zu demodulieren.

3. Drahtloses Kommunikationssystem nach Anspruch 2, wobei die erste Steuereinheit (100a, 300a) der drahtlosen Basisstation (100, 300) dazu ausgelegt ist, die Ressource unter den Ressourcen dem Steuersignal zuzuordnen, derart dass eine Region, die dem Zeitabschnitt entspricht, und eine Region, die dem vorhergehenden Zeitabschnitt entspricht, in einer Frequenzrichtung unterbrochen sind.

4. Drahtloses Kommunikationssystem nach Anspruch 3, wobei die erste Steuereinheit (300a) der drahtlosen Basisstation (300) für Folgendes ausgelegt ist:
Speicher von Mustern mehrerer Ressourcen, die gemäß einer Benutzereinrichtungskategorie, die ein Index ist, der die Verarbeitungskapazität der drahtlosen Mobilstation (400) anzeigt, in dem vorhergehenden Zeitabschnitt unterschiedliche Startpositionen aufweisen, in einer Speichereinheit, und
Auswählen der Ressource, die der Benutzereinrichtungskategorie, die von der drahtlosen Mobilstation (400) mitgeteilt wird, entspricht, aus der Steuereinheit, und Zuordnen der ausgewählten Ressource zu dem Steuersignal, und
wobei die erste Kommunikationseinheit (300b) der drahtlosen Basisstation (300) dazu ausgelegt ist, das Steuersignal an die drahtlosen Mobilstation (400) unter Verwendung der Ressource zu übertragen.

5. Drahtloses Kommunikationssystem nach Anspruch 4, wobei die drahtlose Basisstation (300) dazu ausgelegt ist, dass
die Startposition der Ressource, die der Benutzereinrichtungskategorie entspricht, die höher als ein vorbestimmter Wert ist, wird auf eine vorbestimmte Position in dem vorhergehenden Zeitabschnitt gesetzt, und
die Startposition der Ressource, die der Benutzereinrichtungskategorie entspricht, die der vorbestimmten Wert oder weniger ist, ist auf eine Position, die der Position in dem vorhergehenden Zeitabschnitt vorausgeht, gesetzt.

6. Drahtloses Kommunikationssystem nach Anspruch 4, wobei die erste Kommunikationseinheit (300b) der drahtlosen Basisstation (300) dazu ausgelegt ist, der drahtlosen Mobilstation (400) eine Suchraum-Umschaltanweisung, die das Umschalten eines Suchraums, der der drahtlosen Mobilstation (400) eigen ist, auf die Ressource, die von der ersten Steuereinheit (300a) ausgewählt ist, anweist, mitzuteilen, und
wobei die zweite Steuereinheit (400a) der drahtlosen Mobilstation (400) dazu ausgelegt ist, die Informationen, die in dem Steuersignal enthalten sind, durch Durchsuchen der Ressource, die von der Suchraum-Umschaltanweisung, die von der drahtlosen Basisstation (300) mitgeteilt wird, angewiesen wird, zu erfassen, und das Steuersignal zu demodulieren.

## Revendications

1. Station de base sans fil (100, 300) configurée pour transmettre un signal de données et un signal de commande incluant des informations pour une démodulation du signal de données, dans laquelle
la station de base sans fil (100, 300) comprend une première unité de communication (100b, 300b) configurée pour transmettre le signal de commande à une station mobile (200, 400) en utilisant une ressource,
**caractérisé en ce que** la station de base sans fil (100, 300) comprend
une première unité de commande (100a, 300a) configurée pour allouer la ressource à utiliser par la première unité de communication (100b, 300b) au signal de commande incluant des informations utilisées pour une démodulation du signal de données à travers une section de temps dans laquelle le signal de données est transmis et une section de temps précédente qui précède la section de temps et dans laquelle est transmis un autre signal de données différent du signal de données.

2. Système de communication sans fil comprenant la station de base sans fil selon la revendication 1, comprenant en outre une station mobile sans fil (200, 400) configurée pour recevoir le signal de données et le signal de commande, dans lequel
la station mobile sans fil (200, 400) comprend
une seconde unité de communication (200b, 400b) configurée pour recevoir le signal de commande transmis depuis la station de base (100, 300) en utilisant la ressource à travers la section de temps et la section de temps précédente, et
une seconde unité de commande (200a, 400a) configurée pour démoduler le signal de données sur la base des informations incluses dans le signal de commande.

3. Système de communication sans fil selon la revendication 2, dans lequel la première unité de commande (100a, 300a) de la station de base sans fil (100, 300) est configurée pour allouer la ressource au signal de commande de sorte qu'une région correspondant à la section de temps et une région correspondant à la section de temps précédente sont discontinues dans une direction de fréquence, parmi les ressources.

4. Système de communication sans fil selon la revendication 3, dans lequel la première unité de commande (300a) de la station de base sans fil (300) est configurée :
pour stocker, dans une unité de stockage, des motifs d'une pluralité de ressources ayant des positions de départ différentes dans la section de temps précédente selon une catégorie d'équipement utilisateur qui est un indice indiquant une capacité de traitement de la station mobile sans fil (400), et
pour sélectionner, à partir de l'unité de stockage, la ressource correspondant à la catégorie d'équipement utilisateur notifiée par la station mobile sans fil (400), et allouer la ressource sélectionnée au signal de commande, et
la première unité de communication (300b) de la station de base sans fil (300) est configurée pour transmettre le signal de commande à la station mobile sans fil (400) en utilisant la ressource.

5. Système de communication sans fil selon la revendication 4, dans lequel la station de base sans fil (300) est configurée de telle sorte que :
la position de départ de la ressource correspondant à la catégorie d'équipement utilisateur qui est supérieure à une valeur prédéterminée est établie à une première position dans la section de temps précédente, et
la position de départ de la ressource correspondant à la catégorie d'équipement utilisateur qui est la valeur prédéterminée ou moins est établie à une seconde position précédant la première position dans la section de temps précédente.

6. Système de communication sans fil selon la revendication 4, dans lequel la première unité de communication (300b) de la station de base sans fil (300) est configurée pour notifier à la station mobile sans fil (400) une instruction de commutation d'espace de recherche ordonnant une commutation d'un espace de recherche spécifique à la station mobile sans fil (400) vers la ressource sélectionnée par la première unité de commande (300a) , et
la seconde unité de commande (400a) de la station mobile sans fil (400) est configurée pour acquérir les informations incluses dans le signal de commande en recherchant la ressource ordonnée par l'instruction de commutation d'espace de recherche notifiée par la station de base sans fil (300), et pour démoduler le signal de commande.
